# EUROPÄISCHE PATENTSCHRIFT

(11) **EP 2 838 770 B1**
(45) Veröffentlichungstag und Bekanntmachung des Hinweises auf die Patenterteilung: **03.10.2018**
(21) Anmeldenummer: 13714584.3
(22) Anmeldetag: 25.03.2013
(51) Int. Cl.: B60W 20/00, B60W 50/02, B60W 30/18

(54) **VERFAHREN UND VORRICHTUNG ZUM BETREIBEN EINER ANTRIEBSVORRICHTUNG EINES FAHRZEUGS**
METHOD AND DEVICE FOR OPERATING A DRIVE DEVICE OF A VEHICLE
PROCÉDÉ ET DISPOSITIF PERMETTANT DE FAIRE FONCTIONNER UN DISPOSITIF D'ENTRAÎNEMENT D'UN VÉHICULE

(30) Priorität: 16.04.2012 DE 102012206147
(43) Veröffentlichungstag der Anmeldung: 25.02.2015
(73) Patentinhaber: Robert Bosch GmbH, 70442 Stuttgart (DE)
(72) Erfinder: FALKENSTEIN, Jens-Werner, 73434 Aalen (DE); MECKS, Michael, 71665 Vaihingen (DE)
(86) Internationale Anmeldenummer: PCT/EP2013/056204
(87) Internationale Veröffentlichungsnummer: WO 2013/156260

(56) Entgegenhaltungen:
- DE-A1-102006 030 157
- JP-A- 2003 061 205
- US-A1- 2008 109 139
- US-A1- 2011 046 829

## Beschreibung

Die Erfindung betrifft ein Verfahren zum Betreiben einer Antriebsvorrichtung eines Fahrzeugs, insbesondere Kraftfahrzeugs, die zumindest eine elektrische oder hydraulische Maschine als Antriebsaggregat aufweist. Ferner betrifft die Erfindung eine entsprechende Vorrichtung und ein System.

### Stand der Technik

Moderne Kraftfahrzeugantriebsstränge weisen aus Kostengründen meist keine direkte Messung von aktuell erzeugten Antriebsmomenten auf. Momenten- oder Leistungsabgabe eines Antriebsaggregates lässt sich damit nicht direkt ermitteln. Insbesondere bei Hybrid- oder Elektrofahrzeugen, deren Antriebsvorrichtung zumindest eine elektrische oder hydraulische Maschine als Antriebsaggregat insbesondere zusätzlich zu einer konventionellen Brennkraftmaschine aufweisen, kann auch bei stehendem Fahrzeug ein Kraftschluss zwischen einem oder mehreren dieser Antriebsaggregate und den Antriebsrädern des Kraftfahrzeugs vorliegen. Eine fehlerhafte Momenten- oder Leistungsabgabe des zumindest einen Antriebsaggregats, beispielsweise aufgrund eines Kommunikationsfehlers oder eines Software- oder Bordteilfehlers, kann eine sicherheitskritische falsche Bewegung des Fahrzeugs hervorrufen. Bei Fahrzeugen mit einer elektrischen oder hydraulischen Maschine als Antriebsaggregat wird häufig auf einen Rückwärtsgang im Getriebe, falls ein solches überhaupt vorgesehen ist, verzichtet. Wird in diesem Fall eine Rückwärtsfahrt gewünscht, erfolgt ein Drehrichtungswechsel des Antriebsaggregates gegenüber der Drehrichtung bei Vorwärtsfahrt. Der Drehrichtungswechsel wird durch eine geänderte Ansteuerung, beispielsweise durch eine geänderte Drehrichtung des Magnetfelds einer Drehstrommaschine, die als Antriebsaggregat vorgesehen ist, hervorgerufen. Neben Bauteil- oder Softwarefehlern können Fehler in der Leistungsverkabelung, den Sensorkabeln eines Rotorlage- oder Drehzahlsensors oder eine falsche Orientierung von Sensorteilen relativ zur Welle beziehungsweise zum Gehäuse des Antriebsaggregates zu einem in die falsche Richtung wirkenden Drehmoment führen. Beim Anfahren des Fahrzeugs würde dies zu einer Fahrzeugbewegung in die falsche Fahrtrichtung führen. Insbesondere wenn sich Personen in der Nähe des Fahrzeugs befinden, entsteht hierdurch eine höchst sicherheitskritische Situation.

Aus der Offenlegungsschrift US 2008/109139 A1 ist bereits ein Verfahren bekannt, bei welchem eine aktuelle Fahrtrichtung eines Fahrzeugs und die Wirkrichtung einer aktuellen Antriebskraft verglichen werden, und dass wenn die Antriebskraft der Fahrtrichtung entgegengesetzt ist, die Antriebskraft soweit erhöht wird, bis sich die Fahrtrichtung ändert. Außerdem offenbart es die Druckschrift, dass wenn sich das Fahrzeug in eine Richtung bewegt, die einer Ziel-Antriebsrichtung entgegengesetzt ist, ein Getriebe in einen neutralen Zustand versetzt wird, um eine Antriebseinrichtung zu schützen.

### Offenbarung der Erfindung

Das erfindungsgemäße Verfahren hat den Vorteil, dass ein Anfahren des Kraftfahrzeugs in eine falsche beziehungsweise unerwünschte Richtung sicher erfasst und verhindert werden kann. Hierzu werden die in Anspruch 1 genannten Schritte durchgeführt. Erfindungsgemäß ist dabei vorgesehen, dass zunächst eine durch den Fahrer des Fahrzeugs vorgebbare Zielantriebsrichtung ermittelt wird, eine aktuelle Fahrtrichtung des Fahrzeugs erfasst und dann mit der vorgegebenen Zielantriebsrichtung verglichen wird, wobei dann, wenn die aktuelle Fahrtrichtung von der Zielantriebsrichtung abweicht, die Wirkrichtung einer aktuellen Antriebskraft erfasst und mit der Zielantriebsrichtung verglichen wird. Dabei ist erfindungsgemäß vorgesehen, dass, wenn die Wirkrichtung von der Zielantriebsrichtung abweicht, ein unerlaubtes Antreiben des Fahrzeugs detektiert beziehungsweise bestimmt wird. Unter einem unerlaubten Antreiben des Fahrzeugs ist insofern ein Antreiben des Fahrzeugs in die falsche, also der
Zielantriebsrichtung entgegengesetzte Richtung zu verstehen. Durch den Vergleich der Antriebsrichtung mit der Zielantriebsrichtung wird zunächst geprüft, ob sich das Fahrzeug bereits in die gewünschte Richtung bewegt. Durch den Vergleich der Wirkrichtung der aktuellen Antriebskraft mit der Zielantriebsrichtung wird festgestellt, ob es sich bei der aktuellen Fahrtrichtung um eine erlaubte Fahrtrichtung handelt.

Steht das Fahrzeug beispielsweise mit der Zielfahrtrichtung "vorwärts"; an einer Steigung, so wird bei ausreichend hoher positiver Zugkraft beziehungsweise Antriebskraft an den Antriebsrädern die Hangabtriebskraft überwunden und es folgt ein vorwärts gerichtetes Anfahren die Steigung hinauf mit sich einstellender positiver Fahrzeuggeschwindigkeit. Als Produkt der positiven Zugkraft und der positiven Fahrzeuggeschwindigkeit ergibt sich eine positive Leistung, die von dem in diesem Fall motorisch arbeitenden Antriebsaggregat umgesetzt und von einem Energiespeicher oder Energielieferanten zur Verfügung gestellt werden
muss. Die elektrische Maschine oder die hydraulische Maschine erzeugen dann ein positives Drehmoment bei einer positiven Drehzahl. Als Energiespeicher oder Energielieferant kommt beispielsweise eine Batterie oder ein Hydrospeicher infrage.

Ist die positive Zugkraft/Antriebskraft nicht ausreichend, um die Hangabtriebskraft zu überwinden, beispielsweise weil der Fahrer das Fahrpedal nicht ausreichend betätigt, so kann sich das Fahrzeug rückwärts, also entgegen der Zielantriebsrichtung die Steigung hinab rückwärts bewegen. In diesem Fall entsteht eine negative Fahrzeuggeschwindigkeit bei einer positiven Zugkraft beziehungsweise bei einer positiven Antriebskraft. Als Produkt ergibt sich eine negative Antriebsleistung, die dann vom generatorisch arbeitenden Antriebsaggregat umgesetzt und zum Beispiel von dem oben genannten Energiespeicher aufgenommen werden muss. Die elektrische oder hydraulische Maschine erzeugt dann ein positives Drehmoment bei negativer Drehzahl, arbeitet also generatorisch. Der Fahrer kann diesen Zustand bewusst herbeiführen, beispielsweise während eines Einparkvorgangs an einer Steigung. Da die Antriebskraft in diesem Fall in die richtige Richtung wirkt, und beim Durchtreten des Fahrpedals sich das Fahrzeug in die gewünschte Zielantriebsrichtung bewegen würde, handelt es sich in diesem Fall nicht um einen zu detektierenden Fehlerfall beziehungsweise um ein unerlaubtes Antreiben des Fahrzeugs. Es ist somit nicht allein die tatsächliche Bewegungsrichtung des Fahrzeugs für das Detektieren eines unerlaubten Antreibens ausschlaggebend.

Bei vorgegebener Zielfahrtrichtung "vorwärts" und negativer Fahrzeuggeschwindigkeit, also aktueller Fahrtrichtung "rückwärts", darf dagegen eine negative Antriebskraft nicht eingestellt werden. Eine negative Antriebskraft/Zugkraft würde in diesem Fall ein starkes sicherheitskritisches Antreiben entgegen der Zielfahrtrichtung hervorrufen, verbunden mit einer positiven Leistung im motorischen Betrieb des Antriebsaggregats und einer entsprechenden Leistungsabgabe des Energiespeichers beziehungsweise des Energielieferanten an das Antriebsaggregat. Entsprechend darf bei der Zielfahrtrichtung "rückwärts" und einer aktuellen Fahrtrichtung entgegen der Zielfahrtrichtung, also "vorwärts", das heißt bei positiver Fahrzeuggeschwindigkeit, eine positive, und damit in die falsche Wirkrichtung antreibende Zugkraft/Antriebskraft nicht eingestellt werden. Somit wird in diesem Fall ebenfalls ein unerlaubtes Antreiben detektiert.

Das Verfahren verhindert also auf einfache und sichere Art und Weise, dass bei einer Fahrzeugbewegung entgegen der Zielantriebsrichtung kein Antreiben beziehungsweise kein motorischer Betrieb des Antriebsaggregats entgegen der Zielantriebsrichtung eingestellt wird. In bestimmten Fällen ist-wie erwähnteine aktuelle Fahrtrichtung entgegen der Zielantriebsrichtung erlaubt, sofern kein motorischer Betrieb in die Fahrtrichtung erfolgt beziehungsweise keine positive Leistung vom Antriebsaggregat umgesetzt wird.

Vorzugsweise wird zum Ermitteln der Zielantriebsrichtung eine Stellung eines durch den Fahrer bedienbaren Gangwählhebels erfasst. So gibt der Fahrer die Zielantriebsrichtung beispielsweise über die Vorgabe einer Wahlhebelposition D für Vorwärtsfahrt oder R für Rückwärtsfahrt vor. Aus Erfassen der Wahlhebelstellung lässt sich somit einfach auf die gewünschte Zielantriebsrichtung schließen.

Gemäß einer vorteilhaften Weiterbildung der Erfindung ist vorgesehen, dass die aktuelle Fahrtrichtung aus einer aktuellen Geschwindigkeit ermittelt wird. Dabei spielt nicht unbedingt die Höhe der Geschwindigkeit eine Rolle, sondern zunächst nur ob die Geschwindigkeit positiv oder negativ ausfällt. Bei einer positiven Geschwindigkeit wird vorzugsweise eine Fahrtrichtung "vorwärts" festgestellt, während bei einer negativen Geschwindigkeit eine Fahrtrichtung "rückwärts" bestimmt wird. Besonders bevorzugt werden zum Bestimmen der aktuellen Geschwindigkeit ein oder mehrere Sensorsignale berücksichtigt, die bei der Ansteuerung des Antriebsaggregats nicht benutzt werden, sodass die Geschwindigkeit redunant erfassbar ist.

Vorzugsweise werden daher zum Bestimmen der aktuellen Geschwindigkeit wenigstens eine Drehzahl, vorzugsweise mehrere Drehzahlen der Antriebsvorrichtung erfasst beziehungsweise gemessen. Aus diesen Drehzahlen kann dann auf einfache Art und Weise die aktuelle Geschwindigkeit berechnet werden. Werden mehrere Drehzahlen erfasst und entsprechende Geschwindigkeiten berechnet, so lässt sich eine Durchschnittsgeschwindigkeit bilden, beziehungsweise die von einem Sensor erfasste Geschwindigkeit plausibilisieren oder mitteln.

Gemäß einer vorteilhaften Weiterbildung der Erfindung ist vorgesehen, dass ein unerlaubtes Antreiben nur dann detektiert wird, wenn die Richtung von der Zielantriebsrichtung abweicht und eine vorgebbare Grenzgeschwindigkeit überschritten wird. Besonders bevorzugt ist vorgesehen, dass das Verfahren erst dann aktiviert beziehungsweise durchgeführt wird, wenn bei einer Zielantriebsrichtung "vorwärts" die bestimmte Geschwindigkeit eine negative Grenzgeschwindigkeit unterschreitet, das Fahrzeug sich also rückwärts, entgegen der Zielantriebsrichtung bewegt. Entsprechend wird das Verfahren dann aktiv, wenn bei einer Zielantriebsrichtung "rückwärts" die ermittelte Geschwindigkeit eine positive Grenzgeschwindigkeit überschreitet, das Fahrzeug sich also vorwärts, entgegen der Zielfahrtrichtung bewegt.

Die Wirkrichtung der aktuellen Antriebskraft kann auch im Rahmen einer Bestimmung der Antriebsleistung berücksichtigt werden. Vorzugsweise wird die Leistung aus dem Produkt von Antriebskraft und Geschwindigkeit des Fahrzeugs ermittelt. Die aktuelle Antriebsleistung wird bevorzugt mit einer vorgebbaren Grenzleistung verglichen und nur bei Überschreiten der Grenzleistung wird ein unerlaubtes Antreiben detektiert. Die Antriebsleistung wird bevorzugt aus dem Produkt aus der ermittelten Geschwindigkeit und der Summe aller Antriebskräfte der Antriebsräder bestimmt. Zweckmäßigerweise wird ein unerlaubtes Antreiben bestimmt/detektiert, wenn die Antriebsleistung bei einer Fahrzeugbewegung entgegen der Zielantriebsrichtung positiv ausfällt.

Besonders bevorzugt werden bei der Bestimmung der aktuellen Antriebsleistung Wirkungsgrade weiterer Verbraucher oder der Antriebsaggregate berücksichtigt. Insbesondere wird auch die Leistung weiterer Verbraucher, wie beispielsweise von elektrisch oder hydraulisch angetriebenen Nebenaggregaten, berücksichtigt. Vorzugsweise werden Wirkungsgrade der Antriebsvorrichtung in Form von elektrischen, magnetischen und/oder mechanischen Verlusten berücksichtigt. Diese werden bevorzugt betriebszustandsabhängig, anhand von abgespeicherten Werten, beispielsweise in Form von Kennlinien oder Kennfeldern, ermittelt. Vorzugsweise wird die vorgebbare Grenzleistung in Abhängigkeit von dem Betriebszustand des Fahrzeugs vorgegeben. Gemäß einer vorteilhaften Weiterbildung der Erfindung ist vorgesehen, dass der Anteil, um den die Antriebsleistung die Grenzleistung überschreitet, über die Zeit aufintegriert und ein Fehlerfall dann detektiert, wenn der aufintegrierte Wert eine weitere Schwelle überschreitet.

Zum Bestimmen der Antriebskraft werden vorzugsweise Strom beziehungsweise Spannung einer oder mehrerer elektrischer Energiespeicher oder Energiewandler beziehungsweise der Druck- oder Volumenstrom einer oder mehrerer hydraulischer Energiespeicher oder Energiewandler berücksichtigt. Dadurch werden nicht die Daten von den Antriebsaggregaten zugeordneter Sensoren ausgewertet, sondern redundante Werte ermittelt. Dies erhöht die Sicherheit auch bei Auftreten von Sensorfehlern.

Gemäß einer vorteilhaften Weiterbildung der Erfindung ist vorgesehen, dass beim Detektieren eines unerlaubten Antreibens das mindestens eine Antriebsaggregat abgeschaltet oder mit einem reduzierten Drehmoment beaufschlagt wird, und/oder dass eine Bremseinrichtung des Fahrzeugs aktiviert wird. Vorzugsweise werden alle Antriebsaggregate bei Erkennen eines unerlaubten Antreibens abgeschaltet. Zusätzlich wird bevorzugt die Betriebsbremse aktiviert, um das sich gegebenenfalls bereits in Bewegung befindliche Fahrzeug abzubremsen. Gemäß einer vorteilhaften Weiterbildung ist vorgesehen, dass das Detektieren eines unerlaubten Antreibens bei einer Fahrzeugbewegung entgegen der Zielantriebsrichtung nur dann erfolgt, wenn der Betrag der Fahrzeuggeschwindigkeit eine vorgegebene Schwelle überschreitet.

Die erfindungsgemäße Vorrichtung mit den Merkmalen des Anspruchs 9 führt zu den oben bereits genannten Vorteilen. Sie zeichnet sich durch Mittel aus, die eine durch den Fahrer vorgegebene Zielantriebsrichtung ermitteln, eine aktuelle Fahrtrichtung erfassen und mit der vorgegebenen Zielantriebsrichtung vergleichen, eine Wirkrichtung einer aktuellen Antriebskraft erfassen und mit der Zielantriebsrichtung vergleichen, und die, wenn die aktuelle Fahrtrichtung von der Zielantriebsvorrichtung abweicht, ein unerlaubtes Antreiben des Fahrzeugs detektieren, wenn die Wirkungsrichtung von der Zielantriebsrichtung abweicht. Weitere Vorteile und Weiterbildungen der Vorrichtung ergeben sich aus dem oben bereits beschriebenen. Insbesondere ist vorgesehen, dass es sich bei den Mitteln um ein Steuergerät handelt, das der Antriebsvorrichtung zugeordnet ist und mit den jeweiligen Sensoren verbunden/verbindbar ist und das mindestens eine Antriebsaggregat und gegebenenfalls die Bremseinrichtung des Fahrzeugs wie oben beschrieben ansteuert.

Die Erfindung betrifft ferner ein System, insbesondere eine Antriebsvorrichtung eines Fahrzeugs, insbesondere Kraftfahrzeugs, mit mindestens einer elektrischen oder hydraulischen Maschine als Antriebsaggregat, die mit Antriebsrädern der Antriebsvorrichtung wirkverbunden ist. Dabei ist vorgesehen, dass das System die oben beschriebene Vorrichtung umfasst/aufweist.

Im Folgenden soll die Erfindung anhand der Zeichnung näher erläutert werden. Dazu zeigen:
- Figur 1: eine Antriebsvorrichtung eines Elektrofahrzeugs in einer vereinfachten Darstellung, und
- Figur 2: ein Ablaufschema zur Detektion eines unerlaubten Antreibens eines die Antriebsvorrichtung aufweisenden Fahrzeugs.

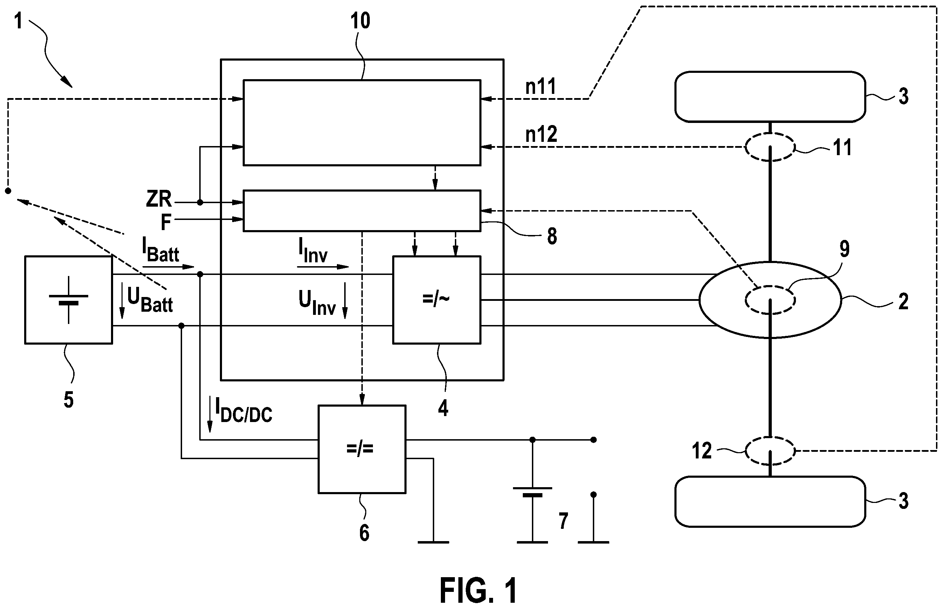

Figur 1 zeigt ein Ausführungsbeispiel einer Antriebsvorrichtung 1, die als Elektroantriebsvorrichtung eines Elektrofahrzeugs ausgebildet ist. Ein Antriebsaggregat der Antriebsvorrichtung 1, das als elektrische Maschine 2 ausgebildet ist, ist mit Antriebsrädern 3 gekoppelt, ein optionales Getriebe ist nicht dargestellt. Die elektrische Maschine 2 ist als Drehstrommaschine ausgeführt und wird von einem Inverter gespeist, der den Gleichstrom einer Hochvoltbatterie 5 in einen dreiphasigen Drehstrom wandelt. Die Hochvoltbatterie 5 ist als Energiespeicher mit einem Gleichspannungswandler 6 gekoppelt, der ein Niederspannungsbordnetz 7 des Fahrzeugs versorgt. Aus Größe und Phasenlage beziehungsweise Drehrichtung des Drehstroms ergeben sich Höhe und Wirkrichtung des von der elektrischen Maschine 2 aktuell erzeugten Drehmoments. Zur Bestimmung der korrekten Phasenströme wird dem Inverter 4 beziehungsweise einer dem Inverter 4 zugeordneten Steuereinrichtung 8 von einem Rotorlagegeber 9 der elektrischen Maschine 2 der aktuelle Drehwinkel ihres Rotors relativ zum Dreiphasenstrom eines Stators der elektrischen Maschine 2 gemeldet. Ebenso werden die Spannung U_{Inv} und der Strom I_{Inv} an den gleichstromseitigen Anschlüssen des Inverters 4 ermittelt und in den Algorithmus zur Einstellung des Drehmomentes der elektrischen Maschine 2 beziehungsweise zur Erzeugung der Dreiphasenströme genutzt beziehungsweise berücksichtigt.

Der Fahrer des Fahrzeugs gibt eine gewünschte Zielantriebsrichtung durch Betätigen eines hier nicht dargestellten Gangwählhebels vor. Die Stellung beziehungsweise Position des Gangwählhebels wird überwacht, und je nach Stellung des Gangwählhebels wird erfasst, ob als Zielantriebsrichtung Vorwärtsfahrt oder Rückwärtsfahrt durch den Fahrer vorgegeben wird. Insbesondere ist vorgesehen, dass durch Erfassen der Wählhebelposition "D" als Zielantriebsrichtung "Vorwärtsfahrt" und durch Erfassen der Wählhebelposition "R" als Zielantriebsrichtung "Rückwärtsfahrt" vorgegeben wird. Die vom Fahrer gewählte Zielantriebsrichtung ZR wird der Steuereinrichtung 8 gemeldet. Daneben erhält die Steuereinrichtung 8 außerdem ein Signal F, das die momentane Fahrpedalbetätigung des Fahrers wiedergibt. Aus den erhaltenen Werten ermittelt die Steuereinrichtung 8 ein Fahrerwunschmoment, aus welchem das Drehmoment für die elektrische Maschine 2 berechnet wird.

Weiterhin ist eine Detektionseinrichtung 10 vorgesehen, die ein unerlaubtes Antreiben des Fahrzeugs erkennt. Die Detektionseinrichtung 10 erhält ebenfalls als Eingangssignal die Zielantriebsrichtung ZR aus der eingelegten Wählhebelposition, wobei bevorzugt ein zweiter, redunanter Pfad in der Auswertung der Hebelposition vorgesehen ist. Die Detektionseinrichtung 10 erhält weiterhin Informationen über den Strom I_{Batt} und die Batteriespannung U_{Batt} und die Drehzahlen n₁₁ und n₁₂ von Drehzahlsensoren 11, 12, die jeweils einem der Antriebsräder 3 zugeordnet sind.

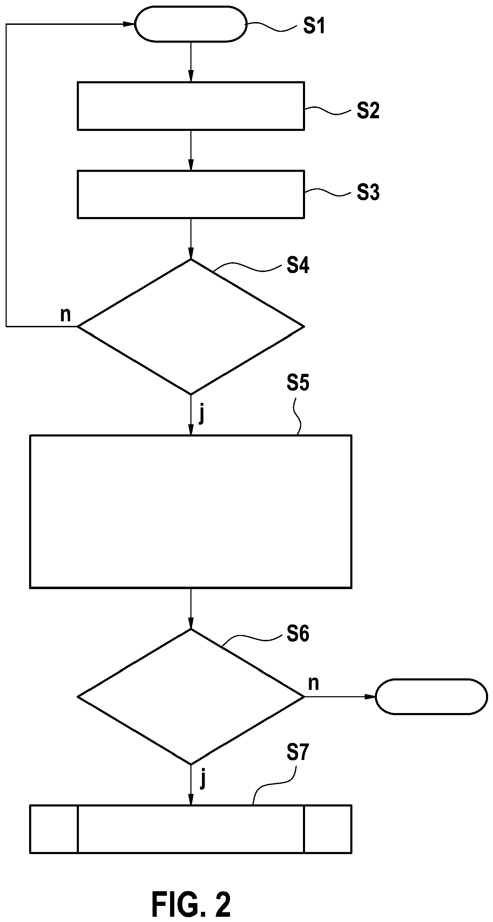

Mit Bezug auf Figur 2 soll nunmehr die Funktionsweise insbesondere der Detektionseinrichtung 10 näher erläutert werden. Hierzu stellt die Figur 2 ein Ablaufschema dar, das mit der Inbetriebnahme der Antriebsvorrichtung 1 in einem ersten Schritt S1 beginnt. In einem darauffolgenden zweiten Schritt S2 wird zunächst die Zielantriebsrichtung ZR, die der Wählhebelposition entspricht, ermittelt, um zu erfassen, ob der Fahrer vorwärts oder rückwärts fahren möchte. Im nächsten Schritt S3 werden die aktuelle Fahrtrichtung und vorzugsweise auch die aktuelle Fahrgeschwindigkeit des Fahrzeugs ermittelt. Hierzu wertet die Detektionseinrichtung 10 die Drehzahlsignale n₁₁ und n₁₂ der Drehzahlsensoren 11 und 12 aus. Da nicht Sensoren oder Daten zum Erfassen der aktuellen Fahrtrichtung und der Geschwindigkeit genutzt werden, die zum Betreiben des Antriebsaggregats, nämlich der elektrische Maschine 2 vorgesehen sind, wird eine Redundanz gegen Sensorausfall erhalten. Aus den Sensorsignalen n₁₁ und n₁₂, die vorzugsweise gemittelt werden, wird die aktuelle Fahrzeuggeschwindigkeit bestimmt. Durch Kenntnis der Geschwindigkeit ist auch die Fahrtrichtung bekannt. Bei einer positiven Geschwindigkeit bewegt sich das Fahrzeug vorwärts, bei einer negativen Geschwindigkeit rückwärts. Denkbar wäre es auch, zusätzlich oder alternativ einen Drehzahlsensor in einem Getriebe oder eines Gebers für ein Tachosignal zu nutzen. Sind mehr als eine elektrische Maschine 2 als Antriebsaggregate vorgesehen, können die einzelnen Aggregatedrehzahlen zueinander plausibilisiert werden und bei Übereinstimmung die Basis für die Fahrzeuggeschwindigkeit bilden.

Im folgenden Schritt S4 wird die in Schritt S3 ermittelte aktuelle Fahrtrichtung mit der Zielantriebsrichtung verglichen. Insbesondere wird geprüft, ob bei Zielantriebsrichtung "vorwärts" die Fahrzeuggeschwindigkeit eine negative Geschwindigkeitsschwelle unterschreitet, die aktuelle Fahrtrichtung also von der Zielantriebsrichtung abweicht, oder ob bei Zielantriebsrichtung "rückwärts" die Fahrzeuggeschwindigkeit eine positive Geschwindigkeitsschwelle überschreitet, die aktuelle Fahrtrichtung also von der Zielantriebsrichtung abweist. Falls die Zielantriebsrichtung und die aktuelle Fahrtrichtung übereinstimmen (n), wird das Verfahren ab Schritt S1 wiederholt. Weicht die aktuelle Fahrtrichtung von der Zielantriebsrichtung ab (j) wird das Verfahren im folgenden Schritt S5 weitergeführt. In diesem Schritt S5 wird die aktuelle Antriebsleistung der Antriebvorrichtung 1 ermittelt. Hierzu wird zunächst die momentane Batterieleistung aus der Spannung U_{Batt} und dem Strom I_{Batt} der Hochvoltbatterie 5 ermittelt. Anschließend wird die Batterieleistung elektrischer Nebenaggregate, im Ausführungsbeispiel um die momentane Leistung des Gleichspannungswandlers 6 unter Berücksichtigung des momentanen Stroms I_{DC/DC} korrigiert. Daraus ergibt sich die Leistung P_{Inv} an den gleichstromseitigen Anschlüssen des Inverters 4. Weiterhin wird die gleichstromseitige Inverterleistung P_{Inv} um die Verluste des Inverters 4, die zum Beispiel in einem Kennfeld abhängig von Temperatur, Batteriespannung und Betriebspunkt (Fahrzeuggeschwindigkeit, Fahrerwunschmoment) abgelegt sind, korrigiert. Es ergibt sich die phasenstromseitige Inverterleistung. Diese wiederum wird um betriebspunktabhängige (in Kennfeldern abgelegt) elektrische und magnetische Verluste der elektrischen Maschine 2 korrigiert. Es ergibt sich die mechanische Leistung der Elektromaschine 2. Weiterhin wird die mechanische Leistung der elektrischen Maschine um Triebstrangverluste, beispielsweise in den Lagerungen, Getriebeverluste, Wellendichtringe oder dergleichen, die zum Beispiel vom Fahrerwunschmoment und der aktuellen Geschwindigkeit des Fahrzeugs abhängen (Kennfelder), korrigiert. Es ergibt sich die Antriebsleistung an den Radnaben beziehungsweise Antriebsrädern 3. Bei Bedarf wird die Antriebsleistung an den Antriebsrädern 3 um Rollreibung und Reifenschlupf korrigiert, woraus sich die aktuelle Antriebsleistung des Fahrzeugs ergibt.

Die so ermittelte Antriebsleistung wird mit einer vorgebbaren Leistungsgrenze, von beispielsweise 300 W, im darauffolgenden Schritt S6 verglichen. Überschreitet die ermittelte Antriebsleistung die Grenzleistung (j), so wird ein unerlaubtes Antreiben des Fahrzeugs detektiert. Andernfalls (n) wird das Verfahren bei Schritt S1 neu gestartet.

Die Detektionseinheit 10 ermittelt somit die durch den Fahrer des Fahrzeugs vorgegebene Zielantriebsrichtung, erfasst eine aktuelle Fahrtrichtung und vergleicht diese mit der Zielantriebsrichtung, und, wenn die aktuelle Fahrtrichtung von der Zielantriebsrichtung abweicht, vergleicht sie die Wirkrichtung einer aktuellen Antriebskraft in Form der Antriebsleistung mit der Zielantriebsrichtung. Weichen diese voneinander ab, wird ein unerlaubtes Antreiben des Fahrzeugs detektiert. Die Detektionseinrichtung 10 stellt somit sicher, dass bei Zielantriebsrichtung "vorwärts" und einer Fahrzeugbewegung entgegen der Zielantriebsrichtung, das heißt negativer Fahrzeuggeschwindigkeit, kein negatives Drehmoment einer elektrischen Maschine 2 beziehungsweise keine negative Zugkraft an den Antriebsrädern 3 eingestellt wird. Entsprechend stellt sie bei Zielantriebsrichtung "rückwärts" und einer Fahrzeugbewegung entgegen dieser Zielantriebsrichtung, das heißt bei positiver Fahrzeuggeschwindigkeit, sicher, dass kein positives Drehmoment einer elektrischen Maschine 2 beziehungsweise keine positive und damit in die falsche Richtung antreibende Zugkraft an den Antriebsrädern 3 eingestellt wird. Dies hat die Steuereinheit 8 bei der Auswertung des Fahrpedalsignals F sicherzustellen. Zur Bestimmung der Fahrzeuggeschwindigkeit nutzt die Steuereinheit 8 das Drehwinkelsignal des Rotorlagegebers 9, aus dem die Drehzahl der Elektromaschine 2 ermittelt wird und bestimmt daraus die aktuelle Fahrzeuggeschwindigkeit. Die Detektionseinrichtung 10 detektiert somit einen unerlaubten Betrieb, wenn die Antriebsleistung bei einer Fahrzeugbewegung entgegen der Zielantriebsrichtung positiv ausfällt und insbesondere die Grenzleistung überschreitet. Kern des Verfahrens ist es also, abhängig von der vom Fahrer vorgegebenen Zielantriebsrichtung ein nicht erlaubtes Antreiben in die der Zielantriebsrichtung entgegengesetzte Fahrtrichtung durch Betrachtung/Berücksichtigung der umgesetzten Antriebsleistung zu detektieren.

Alternativ zur Überschreitung der Grenzleistung, kann die Antriebsleistung des Fahrzeugs beziehungsweise der Antriebsvorrichtung 1 über die Zeit aufsummiert beziehungsweise aufintegriert werden. Ein unerlaubtes Antreiben wird detektiert, wenn der aufintegrierte Wert einem entsprechenden vorgegebenen Grenzwert überschreitet. Damit lässt sich eine Entprellung darstellen, beispielsweise um bei vorhandenen Betriebsstrangschwingungen kein fälschliches Detektieren eines unerlaubten Antreibens zu detektieren.

Wird in Schritt S6 ermittelt, dass die Antriebsleistung die Grenzleistung überschreitet (j), so wird in dem darauffolgenden Schritt S7 eine Sicherungsaktion durchgeführt. Diese umfasst insbesondere das Abschalten der elektrischen Maschine 2. Alternativ ist auch denkbar, anstelle des Abschaltens eine Momentenreduktion der elektrischen Maschine 2 vorzusehen. Zusätzlich kann eine Bremseinrichtung des Fahrzeugs aktiviert werden, um das Fahrzeug insbesondere in den Stillstand abzubremsen.

Die Leistung P_{Inv} an den gleichstromseitigen Anschlüssen des Inverters 4 kann auch aus dem Produkt von im Inverter 4 gemessener Spannung U_{Inv} und im Inverter 4 gemessenen Strom I_{Inv} ermittelt werden, allerdings bietet die oben dargestellte Vorgehensweise eine Redundanz gegenüber Sensordaten. Ebenso kann die phasenstromseitige Inverterleistung aus Phasenströmen und Phasenspannungen ermittelt werden. Dann ist eine redundante Erfassung zur Plausibilisierung der Phasenströme und Phasenspannungen vorteilhaft.

Während gemäß dem vorliegenden Ausführungsbeispiel die Steuereinrichtung 8 und die Detektionseinrichtung 10 als voneinander getrennte Bauteile oder bevorzugt Steuergeräte vorgesehen sind, ist es natürlich auch denkbar, diese in einem gemeinsamen Steuergerät zu integrieren.

Bevorzugt wird im laufenden Betrieb die in der Detektionseinrichtung 10 ermittelte Antriebsleistung gegen eine in der Steuereinrichtung berechnete Elektromaschinenleistung plausibilisiert, um Fehler in der Detektionseinrichtung 10 beziehungsweise in den von der Detektionseinrichtung 10 genutzten Sensoren zu erkennen.

## Patentansprüche

1. Verfahren zum Betreiben einer Antriebsvorrichtung (1) eines Fahrzeugs, insbesondere Kraftfahrzeugs, die zumindest eine elektrische oder hydraulische Maschine (2) als Antriebsaggregat aufweist, umfassend folgende Schritte:
- Ermitteln einer durch den Fahrer des Fahrzeugs vorgegebenen Zielantriebsrichtung (ZR),
- Erfassen einer aktuellen Fahrtrichtung des Fahrzeugs und Vergleichen der aktuellen Fahrtrichtung mit der vorgegebenen Zielantriebsrichtung (ZR),
**gekennzeichnet durch** die Schritte
- Erfassen der Wirkrichtung einer aktuellen Antriebskraft und Vergleichen der Wirkrichtung mit der Zielantriebsrichtung (ZR), wenn die aktuelle Fahrtrichtung von der Zielantriebsrichtung (ZR) abweicht,
- Detektieren/Bestimmen eines unerlaubten Antreibens des Fahrzeugs, wenn die Wirkrichtung von der Zielantriebsrichtung (ZR) abweicht.

2. Verfahren nach Anspruch 1, **dadurch gekennzeichnet, dass** zum Ermitteln der Zielantriebsrichtung (ZR) eine Stellung eines durch den Fahrer bedienbaren Gangwählhebels erfasst wird.

3. Verfahren nach einem der vorhergehenden Ansprüche, **dadurch gekennzeichnet, dass** die aktuelle Fahrtrichtung aus einer aktuellen Geschwindigkeit ermittelt wird.

4. Verfahren nach einem der vorhergehenden Ansprüche, **dadurch gekennzeichnet, dass** zum Bestimmen der aktuellen Geschwindigkeit wenigsten eine Drehzahl (n₁₁,n₂₂), vorzugsweise mehrere Drehzahlen (n₁₁,n₂₂) der Antriebsvorrichtung (1) erfasst werden.

5. Verfahren nach einem der vorhergehenden Ansprüche, **dadurch gekennzeichnet, dass** ein unerlaubtes Antreiben nur dann detektiert wird, wenn eine vorgebbare Grenzgeschwindigkeit überschritten oder unterschritten wird.

6. Verfahren nach einem der vorhergehenden Ansprüche, **dadurch gekennzeichnet, dass** eine aktuelle Antriebsleistung des Antriebsaggregats ermittelt und mit einer vorgebbaren Grenzleistung verglichen wird und dass nur bei Überschreiten der Grenzleistung durch die aktuelle Antriebsleistung ein unerlaubtes Antreiben detektiert wird.

7. Verfahren nach einem der vorhergehenden Ansprüche, **dadurch gekennzeichnet, dass** bei der Ermittlung der Antriebsleistung Wirkungsgrade des Antriebsaggregats und/oder weiterer Verbraucher des Fahrzeugs berücksichtigt werden.

8. Verfahren nach einem der vorhergehenden Ansprüche, **dadurch gekennzeichnet, dass** beim Detektieren eines unerlaubten Antreibens das Antriebsaggregat abgeschaltet oder mit einem reduzierten Drehmoment beaufschlagt wird, und/oder dass eine Bremseinrichtung des Fahrzeugs aktiviert wird.

9. Vorrichtung zum Betreiben einer Antriebsvorrichtung (1) eines Fahrzeugs, insbesondere zur Durchführung des Verfahrens nach einem oder mehreren der Ansprüche 1 bis 8, wobei die Antriebsvorrichtung (1) zumindest eine elektrische oder hydraulische Maschine (2) als Antriebsaggregat aufweist, umfassend Mittel, die eine durch den Fahrer vorgegebene Zielantriebsrichtung (ZR) ermitteln, eine aktuelle Fahrtrichtung erfassen und mit der vorgegebenen Zielantriebsrichtung (ZR) vergleichen,
**gekennzeichnet durch** Mittel, die eine Wirkrichtung einer aktuellen Antriebskraft erfassen und mit der Zielantriebsrichtung (ZR) vergleichen, wenn die aktuelle Antriebsrichtung von der Zielantriebsrichtung (ZR) abweicht, und die ein unerlaubtes Antreiben des Fahrzeugs detektieren, wenn die Wirkungsrichtung von der Zielantriebsrichtung (ZR) abweicht.

10. System, insbesondere eine Antriebsvorrichtung (1) eines Fahrzeugs, insbesondere Kraftfahrzeugs, mit mindestens einer elektrischen oder hydraulischen Maschine (2) als Antriebsaggregat, die mit Antriebsrädern (3) der Antriebsvorrichtung (1) wirkverbunden ist, **dadurch gekennzeichnet, dass** das System eine Vorrichtung gemäß Anspruch 9 umfasst.

## Claims

1. Method for operating a drive device (1) of a vehicle, in particular a motor vehicle, which has at least one electric or hydraulic machine (2) as a drive assembly, comprising the following steps:
- determining a target driving direction (ZR) which is predefined by the driver of the vehicle,
- detecting a current direction of travel of the vehicle and comparing the current direction of travel with the predefined target driving direction (ZR),
**characterized by** the steps
- detecting the direction of action of a current driving force and comparing the direction of action with the target driving direction (ZR) if the current direction of travel deviates from the target driving direction (ZR),
- detecting/determining impermissible driving of the vehicle if the direction of action deviates from the target driving direction (ZR).

2. Method according to Claim 1 **characterized in that** in order to determine the target driving direction (ZR) a position of a gear selective lever which can be operated by the driver is detected.

3. Method according to one of the preceding claims, **characterized in that** the current direction of travel is determined from a current speed.

4. Method according to one of the preceding claims, **characterized in that** in order to determine the current speed at least one rotational speed (n₁₁, n₂₂), preferably a plurality of rotational speeds (n₁₁, n₂₂) of the drive device (1) are detected.

5. Method according to one of the preceding claims, **characterized in that** impermissible driving is detected only if a predefinable limiting speed is exceeded or undershot.

6. Method according to one of the preceding claims, **characterized in that** a current driving power of the drive assembly is determined and compared with a predefinable limiting power and **in that** impermissible driving is detected only when the limiting power is exceeded by the current driving power.

7. Method according to one of the preceding claims, **characterized in that** degrees of efficiency of the drive assembly and/or of further consumers of the vehicle are taken into account during the determination of the driving power.

8. Method according to one of the preceding claims, **characterized in that** during the detection of impermissible driving the drive assembly is switched off or a reduced torque is applied thereto and/or **in that** a braking device of the vehicle is activated.

9. Device for operating a drive device (1) of a vehicle, in particular for carrying out the method according to one or more of Claims 1 to 8, wherein the drive device (1) has at least one electric or hydraulic machine (2) as a drive assembly,
comprising means which determine a target driving direction (ZR) which is predefined by the driver, detect a current direction of travel (ZR) and compare it with the predefined target driving direction (ZR), **characterized by** means which detect a direction of action of a current driving force and compare it with the target driving direction (ZR) if the current driving direction differs from the target driving direction (ZR), and which detect impermissible driving of the vehicle if the direction of action deviates from the target driving direction (ZR).

10. System, in particular a drive device (1) of a vehicle, in particular a motor vehicle, having at least one electric or hydraulic machine (2) as a drive assembly, which is operatively connected to drive wheels (3) of the drive device (1), **characterized in that** the system comprises a device according to Claim 9.

## Revendications

1. Procédé pour faire fonctionner un dispositif de propulsion (1) d'un véhicule, notamment un véhicule automobile, lequel possède au moins une machine électrique ou hydraulique (2) comme groupe propulseur, comprenant les étapes suivantes :
- détermination d'une direction de propulsion cible (ZR) prédéfinie par le conducteur du véhicule,
- détection d'une direction de déplacement actuelle du véhicule et comparaison de la direction de déplacement actuelle à la direction de propulsion cible (ZR) prédéfinie, **caractérisé par** les étapes
- détection de la direction d'action d'une force de propulsion actuelle et comparaison de la direction d'action à la direction de propulsion cible (ZR) lorsque la direction de déplacement actuelle diffère de la direction de propulsion cible (ZR),
- détection/détermination d'une propulsion non autorisée du véhicule lorsque la direction d'action diffère de la direction de propulsion cible (ZR).

2. Procédé selon la revendication 1, **caractérisé en ce qu'**une position d'un levier de sélection de rapport pouvant être actionné par le conducteur est détectée en vue de déterminer la direction de propulsion cible (ZR).

3. Procédé selon l'une des revendications précédentes, **caractérisé en ce que** la direction de déplacement actuelle est déterminée à partir d'une vitesse actuelle.

4. Procédé selon l'une des revendications précédentes, **caractérisé en ce qu'**au moins une vitesse de rotation (n₁₁, n₂₂), de préférence plusieurs vitesses de rotation (n₁₁, n₂₂) du dispositif de propulsion (1), sont acquises en vue de déterminer la vitesse actuelle.

5. Procédé selon l'une des revendications précédentes, **caractérisé en ce qu'**une propulsion non autorisée n'est détectée que si une vitesse limite pouvant être prédéfinie est franchie vers le haut ou vers le bas.

6. Procédé selon l'une des revendications précédentes, **caractérisé en ce qu'**une puissance de propulsion actuelle du groupe propulseur est déterminée et comparée à une puissance limite pouvant être prédéfinie, et **en ce qu'**une propulsion non autorisée n'est détectée qu'en cas de dépassement de la puissance limite par la puissance de propulsion actuelle.

7. Procédé selon l'une des revendications précédentes, **caractérisé en ce que** les taux de rendement du groupe propulseur et/ou des autres récepteurs du véhicule sont pris en compte lors de la détermination de la puissance de propulsion.

8. Procédé selon l'une des revendications précédentes, **caractérisé en ce que** lors de la détection d'une propulsion non autorisée, le groupe propulseur est arrêté ou chargé avec un couple réduit, et/ou **en ce qu'**un appareil de freinage du véhicule est activé.

9. Dispositif pour faire fonctionner un dispositif de propulsion (1) d'un véhicule, notamment pour mettre en oeuvre un procédé selon l'une ou plusieurs des revendications 1 à 8, le dispositif de propulsion (1) possédant au moins une machine électrique ou hydraulique (2) comme groupe propulseur, comprenant des moyens qui déterminent une direction de propulsion cible (ZR) prédéfinie par le conducteur du véhicule, détectent une direction de déplacement actuelle et la comparent à la direction de propulsion cible (ZR) prédéfinie, **caractérisé par** des moyens qui détectent une direction d'action d'une force de propulsion actuelle et la comparent à la direction de propulsion cible (ZR) lorsque la direction de déplacement actuelle diffère de la direction de propulsion cible (ZR), et qui détectent une propulsion non autorisée du véhicule lorsque la direction d'action diffère de la direction de propulsion cible (ZR).

10. Système, notamment un dispositif de propulsion (1) d'un véhicule, notamment un véhicule automobile, comprenant au moins une machine électrique ou hydraulique (2) comme groupe propulseur, laquelle est en liaison fonctionnelle avec les roues motrices (3) du dispositif de propulsion (1), **caractérisé en ce que** le système comporte un dispositif selon la revendication 9.
